# EUROPEAN PATENT APPLICATION

(11) **EP 4 593 280 A1**
(43) Date of publication of application: **30.07.2025**
(21) Application number: 23869831.0
(22) Date of filing: 29.06.2023
(51) Int. Cl.: H02M 7/539, H02M 1/32, H02J 3/32, H02J 3/38, H02J 3/48, H02J 3/24

(54) **ENERGY STORAGE SYSTEM AND ISLAND DETECTION METHOD**

(30) Priority: 30.09.2022 CN 202211216919
(71) Applicant: Huawei Digital Power Technologies Co., Ltd., Shenzhen, Guangdong 518043 (CN)
(72) Inventor: DONG, Mingxuan, Shenzhen, Guangdong 518043 (CN); WANG, Zhuangzhi, Shenzhen, Guangdong 518043 (CN); XIN, Kai, Shenzhen, Guangdong 518043 (CN)
(74) Representative: Isarpatent
(86) International application number: PCT/CN2023/104147
(87) International publication number: WO 2024/066583

(57) **Abstract**

This application provides an energy storage system and an islanding detection method. The energy storage system includes an energy storage unit, a power conditioning system, a frequency detection circuit, and a controller. The controller performs first/second frequency adjustment control on the power conditioning system, adjusts a weight of the first/second frequency adjustment control based on a frequency difference between a frequency of an output voltage of the power conditioning system and a target frequency, controls the frequency of the output voltage of the power conditioning system to be the target frequency, and detects that islanding occurs in the power conditioning system. The first/second frequency adjustment control is used to adjust the frequency of the output voltage of the power conditioning system in a first direction/second direction, where the first direction is a direction in which the frequency of the output voltage is adjusted to be close to a reference frequency of a power grid, and the second direction is a direction in which the frequency of the output voltage is adjusted to be away from the reference frequency of the power grid. After islanding occurs in the power conditioning system in the energy storage system, the controller can adjust the frequency of the output voltage of the power conditioning system in which islanding occurs to the target frequency, so that islanding can be detected and an anti-islanding protection action can be completed.

## Description

### CROSS-REFERENCE TO RELATED APPLICATIONS

This application claims priority to Chinese Patent Application No. 202211216919.5, filed with the China National Intellectual Property Administration on September 30, 2022 and entitled "ENERGY STORAGE SYSTEM AND ISLANDING DETECTION METHOD", which is incorporated herein by reference in its entirety.

### TECHNICAL FIELD

This application relates to the field of power conditioning system control technologies, and in particular, to an energy storage system and an islanding detection method.

### BACKGROUND

In a double-high power grid scenario (with a high proportion of renewable energy and a high proportion of power electronic devices), for example, a scenario in which a short-circuit ratio is extremely small according to the N-1 criterion due to a commutation failure at a high voltage direct current (high voltage direct current, HVDC) transmit end, and an all-power electronic islanding power system, grid-following (grid-following, GFL) control is currently adopted for most renewable energy power generation devices, and therefore, a stability problem of a power grid needs to be urgently resolved. In this case, grid-forming (grid-forming, GFM) control can be introduced to effectively resolve a problem of a maximum proportion of renewable energy, and an independent power system can be also formed by grid-forming to actively stabilize a frequency and a voltage of the power grid. However, when islanding occurs, a voltage and a frequency that are output by a power conditioning system (power conditioning system, PCS) through the GFM control are stable, and consequently, the conventional method cannot be used to determine whether islanding occurs in a PCS using a GFL converter. This is unfavorable to a relay protection action of an entire power grid system. If any PCS continues to operate based on the grid-forming control, a large impulse current may be generated to damage a device once the power grid is recovered.

Therefore, an energy storage system and an islanding detection method need to be proposed, to implement islanding detection on the power conditioning system. After an external power grid is tripped, islanding that occurs in the power conditioning system can be identified, and the power conditioning system can be powered off for protection or switched to off-grid operation.

### SUMMARY

This application provides an energy storage system and an islanding detection method. After islanding occurs in a power conditioning system in the energy storage system, a controller can adjust a frequency of an output voltage of the power conditioning system in which islanding occurs to a target frequency, so that islanding can be detected, and an anti-islanding protection action can be completed.

According to a first aspect, this application provides an energy storage system, including at least one energy storage unit, at least one power conditioning system, a frequency detection circuit, and a controller. The at least one energy storage unit is connected to the at least one power conditioning system in a one-to-one correspondence, and any one of the at least one power conditioning system is configured to: convert a direct current input by a corresponding energy storage unit into an alternating current, and output the alternating current to a power grid. The frequency detection circuit is configured to detect a frequency of an output voltage of the power conditioning system; and the controller is configured to: perform first frequency adjustment control and second frequency adjustment control on the power conditioning system, and adjust a weight of the first frequency adjustment control and a weight of the second frequency adjustment control based on a frequency difference between the frequency of the output voltage of the power conditioning system and a target frequency, to control the frequency of the output voltage of the power conditioning system to be the target frequency, so as to detect that islanding occurs in the power conditioning system. The first frequency adjustment control is used to adjust the frequency of the output voltage of the power conditioning system in a first direction, and the first direction is a direction in which the frequency of the output voltage is adjusted to be close to a reference frequency of the power grid. The second frequency adjustment control is used to adjust the frequency of the output voltage of the power conditioning system in a second direction, and the second direction is a direction in which the frequency of the output voltage is adjusted to be away from the reference frequency of the power grid.

In this application, presence or absence of islanding is detected without depending on a sudden change of a voltage amplitude and a sudden change of a power. The controller may adjust the frequency of the output voltage of the power conditioning system to the target frequency based on an inherent anti-droop characteristic, so that the controller detects that islanding occurs in the power conditioning system. In addition, the system operates stably in the adjustment process and at a final operating frequency. After the controller detects that islanding occurs, the controller may control the power conditioning system to shut down, to complete an anti-islanding protection action. Alternatively, the power conditioning system may be switched to perform off-grid operation, to implement on/off-grid switching.

In a possible implementation, the energy storage system further includes a power detection circuit, configured to detect a voltage and a current on a side that is of the power conditioning system and that is connected to the power grid, to obtain power information of the power conditioning system. The controller is further configured to control the frequency of the output voltage of the power conditioning system to be the target frequency based on the power information of the power conditioning system.

The controller controls the frequency of the output voltage of the power conditioning system based on the power information of the power conditioning system. Specifically, the frequency of the output voltage of the power conditioning system may be adjusted based on the power information of the power conditioning system, the first frequency adjustment control, and the second frequency adjustment control.

In a possible implementation, the controller is further configured to: adjust the weight of the first frequency adjustment control and the weight of the second frequency adjustment control based on the frequency difference between the frequency of the output voltage of the power conditioning system and the target frequency; and control the frequency of the output voltage of the power conditioning system to be the target frequency based on the power information of the power conditioning system, the weight of the first frequency adjustment control, and the weight of the second frequency adjustment control, to detect that islanding occurs in the power conditioning system.

In a possible implementation, the controller is specifically configured to: adjust a magnitude of a modulated wave signal based on the power information of the power conditioning system, the weight of the first frequency adjustment control, and the weight of the second frequency adjustment control, and send the modulated wave signal to a drive circuit of the power conditioning system, to adjust the frequency of the output voltage of the power conditioning system.

The drive circuit of the power conditioning system may include a virtual synchronous generator. The controller may specifically control the adjustment weight of the first frequency adjustment control and the adjustment weight of the second frequency adjustment control based on the frequency difference, and superimposition is performed with the power information of the power conditioning system, to obtain a voltage amplitude reference of an internal potential of the virtual synchronous generator in the drive circuit, so as to adjust the frequency of the output voltage of the power conditioning system. After the voltage amplitude reference of the internal potential of the virtual synchronous generator is obtained, a modulated wave is obtained through closed-loop control of a voltage amplitude of the internal potential. A drive signal may be generated by comparing the modulated wave with a carrier signal, and the drive signal is sent to switch components in the power conditioning system. The switch components in the power conditioning system adjust, under control of the drive signal, a turn-on time sequence of the switch components, to adjust an active power value output by the power conditioning system.

In a possible implementation, the controller is specifically configured to: adjust the frequency of the output voltage of the power conditioning system in the first direction based on the voltage and the current on the side that is of the power conditioning system and that is connected to the power grid for an active load increased for the power conditioning system to be smaller; or adjust the frequency of the output voltage of the power conditioning system in the second direction based on the voltage and the current on the side that is of the power conditioning system and that is connected to the power grid for an active load decreased for the power conditioning system to be greater.

The power conditioning system is networked for operation in a virtual synchronous generation mode, and has a specific active load. When the active load increases, a frequency of the power grid decreases. The controller enables the power conditioning system to automatically increase an active power based on a droop characteristic, to increase an output power. When a relative relationship between the output power of the power conditioning system and the load changes gradually, the frequency of the output voltage of the power conditioning system gradually increases accordingly. After the frequency increases, an amplitude of the active load increased for the power conditioning system decreases accordingly, to finally form a stable state. The controller enables the power conditioning system to automatically decrease an active power output based on an anti-droop characteristic, to decrease an output power. When a degree of mismatch between the output power of the power conditioning system and the load continues to increase, the frequency of the output voltage of the power conditioning system continues to decrease accordingly. After the frequency decreases, an amplitude of the active load decreased for the power conditioning system increases accordingly, so that the frequency of the output voltage of the power conditioning system gradually approaches the reference frequency of the power grid, to finally form a stable state.

In a possible implementation, the controller is specifically configured to: adjust the frequency of the output voltage of the power conditioning system in a first direction if an adjusted adjustment weight of the first frequency adjustment control is greater than an adjusted adjustment weight of the second frequency adjustment control, or adjust the frequency of the output voltage of the power conditioning system in the second direction if an adjusted adjustment weight of the first frequency adjustment control is less than an adjusted adjustment weight of the second frequency adjustment control.

The first frequency adjustment control is used to adjust the frequency of the output voltage of the power conditioning system to the reference frequency of the power grid. The first frequency adjustment control may be considered as adjustment based on the droop characteristic, and under the first frequency adjustment control, a frequency of a final output voltage of the power conditioning system may be stabilized at the reference frequency of the power grid. The second frequency adjustment control is used to keep the frequency of the output voltage of the power conditioning system away from the reference frequency of the power grid. The second frequency adjustment control may be considered as adjustment based on the anti-droop characteristic. Under the second frequency adjustment control, the frequency of the output voltage of the power conditioning system may be kept away from the reference frequency of the power grid, so that the frequency of the final output voltage of the power conditioning system is adjusted to the target frequency.

In a possible implementation, the controller is specifically configured to: when the power conditioning system is electrically connected to the power grid, adjust the weight of the first frequency adjustment control to be greater than the weight of the second frequency adjustment control.

When the power conditioning system is connected to the power grid, a first weight that is of the first frequency adjustment control and that is adjusted by the controller is greater than a second weight of the second frequency adjustment control for supporting a power grid voltage and a frequency of the power grid, so that the frequency of the output voltage of the power conditioning system is adjusted in the first direction. In this case, even if the frequency of the output voltage of the power conditioning system changes, the frequency of the output voltage of the power conditioning system may be adjusted based on the droop characteristic of the controller to help stabilize the frequency of the output voltage of the power conditioning system, so that the frequency of the final output voltage of the power conditioning system is close to the reference frequency of the power grid.

In a possible implementation, the controller is specifically configured to: when the power conditioning system is disconnected from the power grid, adjust the weight of the first frequency adjustment control to be less than the weight of the second frequency adjustment control.

After the power conditioning system is disconnected from the power grid, because the power grid loses clamping effect on the frequency of the output voltage of the power conditioning system, the first weight that is of the first frequency adjustment control and that is adjusted by the controller is less than the second weight of the second frequency adjustment control, so that the frequency of the output voltage of the power conditioning system is adjusted in the first direction, and the controller may adjust the frequency of the output voltage of the power conditioning system to the target frequency, to detect that islanding occurs in the power conditioning system. In addition, the energy storage system including the power conditioning system is stable in both a frequency shift process and two stages of the final operation at the target frequency.

In a possible implementation, the controller is further configured to: disable a target power conditioning system after detecting that islanding occurs in the target power conditioning system; or switch a target power conditioning system to an off-grid state after detecting that islanding occurs in the target power conditioning system.

According to a second aspect, this application provides an islanding detection method. The energy storage system includes at least one energy storage unit, at least one power conditioning system, a frequency detection circuit, and a controller, the at least one energy storage unit is connected to the at least one power conditioning system in a one-to-one correspondence, and any one of the at least one power conditioning system is configured to: convert a direct current input by a corresponding energy storage unit into an alternating current and output the alternating current to a power grid. The method includes:
performing first frequency adjustment control and second frequency adjustment control on the power conditioning system, and adjusting a weight of the first frequency adjustment control and a weight of the second frequency adjustment control based on a frequency difference between a frequency of an output voltage of the power conditioning system and a target frequency, to control the frequency of the output voltage of the power conditioning system to be the target frequency, so as to detect that islanding occurs in the power conditioning system, where the first frequency adjustment control is used to adjust the frequency of the output voltage of the power conditioning system in a first direction, and the first direction is a direction in which the frequency of the output voltage is adjusted to be close to a reference frequency of the power grid; and the second frequency adjustment control is used to adjust the frequency of the output voltage of the power conditioning system in a second direction, and the second direction is a direction in which the frequency of the output voltage is adjusted to be away from the reference frequency of the power grid.

According to a third aspect, this application further provides a photovoltaic system, including at least one photovoltaic module, at least one converter, a frequency detection circuit, and a controller. The at least one photovoltaic module is connected to the at least one converter in a one-to-one correspondence, and any one of the at least one converter is configured to: convert a direct current input by a corresponding photovoltaic module into an alternating current, and output the alternating current to a power grid. The frequency detection circuit is configured to detect a frequency of an output voltage of the converter; and the controller is configured to: perform first frequency adjustment control and second frequency adjustment control on the converter, and adjust a weight of the first frequency adjustment control and a weight of the second frequency adjustment control based on a frequency difference between the frequency of the output voltage of the power conditioning system and a target frequency, to control the frequency of the output voltage of the converter to be the target frequency, so as to detect that islanding occurs in the converter. The first frequency adjustment control is used to adjust the frequency of the output voltage of the power conditioning system in a first direction, and the first direction is a direction in which the frequency of the output voltage is adjusted to be close to a reference frequency of the power grid. The second frequency adjustment control is used to adjust the frequency of the output voltage of the power conditioning system in a second direction, and the second direction is a direction in which the frequency of the output voltage is adjusted to be away from the reference frequency of the power grid.

For a description of technical effect that can be achieved in the second aspect to the third aspect, refer to the description of technical effect that can be achieved in any possible design of the first aspect. Details are not repeated.

### BRIEF DESCRIPTION OF DRAWINGS

FIG. 1 is a diagram 1 of a structure of an energy storage system;
FIG. 2 is a diagram 2 of a structure of an energy storage system;
FIG. 3 is a diagram 3 of a structure of an energy storage system;
FIG. 4 is a diagram of frequency adjustment performed by a controller on a power conditioning system; and
FIG. 5 is a waveform diagram of a power conditioning system detected by a controller.

### DESCRIPTION OF EMBODIMENTS

To make the objectives, technical solutions, and advantages of this application clearer, the following further describes this application in detail with reference to the accompanying drawings. However, example implementations may be implemented in a plurality of forms and should not be construed as being limited to implementations described herein. On the contrary, these implementations are provided such that this application is more comprehensive and complete and fully conveys the concept of the example implementations to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that, in descriptions of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

A power conditioning system has two control manners: grid-forming control and grid-following control. The grid-forming control can be used to actively establish an amplitude and a frequency of an alternating current voltage, and the grid-forming control can be used to track a voltage phase of a power grid, but cannot actively stabilize an amplitude and a frequency of a voltage. In the grid-forming control, the power conditioning system has an inductive droop characteristic of a synchronous generator, and therefore can actively stabilize the alternating current voltage.

Currently, in most renewable energy power generation and energy storage systems, the grid-following control is adopted for the power conditioning system. The grid-following control is used to track the voltage phase of the power grid, and cannot be used to actively stabilize an amplitude and a frequency of a voltage, and therefore, the grid-forming control may be introduced for grid-forming to form an independent power system, to actively stabilize a frequency and a voltage of the power grid.

In an on-grid mode, the power conditioning system operates in a current source mode, and can actively detect a frequency and phase information of a voltage of the power grid to control an output current. In this case, an internal impedance is characterized by a high value. In an off-grid mode, the power conditioning system operates in a voltage source mode, and actively determines a frequency, an amplitude and phase information of an output voltage to control the output voltage. In this case, an internal impedance is characterized by a low value.

However, when islanding occurs, the power conditioning system needs to use a conventional grid-following control method to determine whether islanding occurs (that is, determine whether islanding occurs based on the amplitude and the frequency of the output voltage) because the power conditioning system tracks the voltage phase of the power grid under existing grid-following control. However, in the grid-forming control, because a voltage and a frequency that are output by the power conditioning system are stable, the controller cannot determine whether unplanned islanding occurs in the power conditioning system. Therefore, the power conditioning system connected to an energy storage unit or a power generation unit keeps operating in islanding. This is unfavorable to relay protection of an entire power grid system. If the power conditioning system using the grid-forming control continues to operate, once the power grid is recovered, the power conditioning system using the grid-forming control generates an extremely large impulse current, to damage another device.

A positive feedback is added to trigger an offset between the voltage and the frequency that are output by the power conditioning system. That is, with the adoption of a positive feedback method, when a power change is close to zero, the positive feedback is enhanced, so that the frequency and the voltage that are output by the power conditioning system change rapidly, to shorten islanding detection time. However, if the positive feedback is added to a loop control, once islanding occurs or a grid-connected operation occurs, the whole power grid is likely to be unstable.

In view of this, an energy storage system needs to be proposed, where a controller can adjust a frequency of an output voltage of a power conditioning system in which islanding occurs to a target frequency, and the controller can detect islanding and complete an anti-islanding protection action.

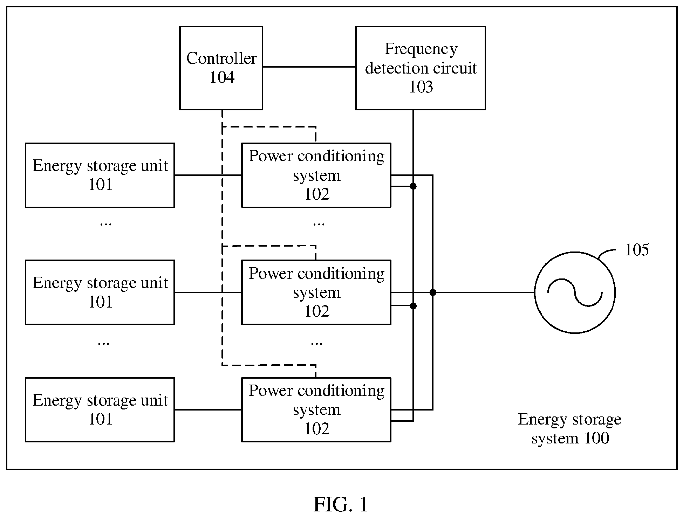

FIG. 1 shows an energy storage system, including at least one energy storage unit 101, at least one power conditioning system 102, a frequency detection circuit 103, and a controller 104.

The at least one energy storage unit 101 is connected to the at least one power conditioning system 102 in a one-to-one correspondence, and any one of the at least one power conditioning system 102 is configured to: convert a direct current input by a corresponding energy storage unit 101 into an alternating current, and output the alternating current to a power grid 105.

The frequency detection circuit 103 is configured to detect a frequency of an output voltage of the power conditioning system 102. The controller is configured to: perform first frequency adjustment control and second frequency adjustment control on the power conditioning system 102, and adjust a weight of the first frequency adjustment control and a weight of the second frequency adjustment control based on a frequency difference between the frequency of the output voltage of the power conditioning system 102 and a target frequency, to control the frequency of the output voltage of the power conditioning system 102 to be the target frequency, so as to detect that islanding occurs in the power conditioning system 102. The first frequency adjustment control is used to adjust the frequency of the output voltage of the power conditioning system 102 in a first direction, and the first direction is a direction in which the frequency of the output voltage is adjusted to be close to a reference frequency of the power grid 105; and the second frequency adjustment control is used to adjust the frequency of the output voltage of the power conditioning system 102 in a second direction, and the second direction is a direction in which the frequency of the output voltage is adjusted to be away from the reference frequency of the power grid 105.

After one or more power conditioning systems 102 in the energy storage system 100 are disconnected from the power grid 105, the controller 104 may enable, through frequency-active power anti-droop control, a frequency of an output voltage of the disconnected power conditioning system 102 to shift. When the frequency of the output voltage of the power conditioning system 102 is adjusted to the target frequency, the controller 104 may detect that islanding occurs in the power conditioning system 102.

When the power grid 105 is disconnected from all the power conditioning systems 102, the controller 104 enables, through the frequency-active power anti-droop control, frequencies of output voltages of all the power conditioning systems 102 to shift. When the frequencies of the output voltages of all the power conditioning systems 102 are adjusted to the target frequency, the controller 104 detects that islanding occurs in all the power conditioning systems 102.

The power conditioning system 102 in grid-forming control may be connected to the energy storage unit 101. The energy storage unit 101 may include an energy storage system (energy storage system, ESS), and the energy storage system may include at least a photovoltaic (photovoltaic, PV) power generation unit, a battery system, a direct current-direct current converter (direct current-direct current converter, DC-DC) unit, and the like. The energy storage system may be connected to the power conditioning system 102 through alternating current coupling, or may be connected to the power conditioning system 102 through direct current coupling.

The power conditioning system 102 in grid-forming control may perform alternating current-to-direct current conversion by controlling charging and discharging of the energy storage unit 101. In the on-grid mode, when the power conditioning system 102 operates in a current source mode, the power conditioning system 102 may detect a frequency and phase information of a voltage of the power grid 105 in which the power conditioning system 102 is located, and may control an output current. In this case, an impedance in the power conditioning system 102 is characterized by a high value. However, in the off-grid mode, when the power conditioning system 102 operates in a voltage source mode, the power conditioning system 102 may detect a frequency, an amplitude, and phase information of an output voltage to control the output voltage. In this case, an impedance in the power conditioning system 102 is characterized by a low value.

The power conditioning system 102 in the grid-forming control may perform frequency-active power droop control to stabilize a frequency. Specifically, the controller 104 may be configured to: obtain a frequency difference between a frequency of the power grid 105 and a reference frequency, where the reference frequency is a rated frequency at which the power grid 105 operates normally; and control, based on the frequency difference, the output voltage of the power conditioning system 102, to stabilize the frequency.

During actual use, if the frequency of the power grid is higher than the reference frequency, it may indicate that an active power currently transmitted on the power grid 105 is higher than an active power actually required by the power grid. If the frequency of the power grid 105 is lower than the reference frequency, it may indicate that the active power currently transmitted on the power grid is lower than the active power actually required by the power grid. A control relationship of a frequency-active power droop control strategy can be established based on a correspondence between the frequency and the active power.

A voltage and a frequency that are output by the power conditioning system 102 in the grid-forming control are stable, and therefore whether islanding occurs cannot be detected based on a sudden change of the voltage amplitude and a sudden change of the power. An anti-droop strategy is introduced in this application. When unplanned islanding occurs, an overall output characteristic of the power conditioning system 102 in which islanding occurs is reflected as an anti-droop characteristic. Due to the anti-droop characteristic, a frequency of the output voltage of the power conditioning system 102 in which islanding occurs may be away from the reference frequency of the power grid, and increases or decreases to a target frequency (rather than the frequency of the power grid). Therefore, it is convenient to detect that islanding occurs in the power conditioning system 102.

Specifically, after the frequency detection circuit 103 detects the frequency of the output voltage of the power conditioning system 102, the controller 104 may adjust a weight of the first frequency adjustment control and a weight of the second frequency adjustment control based on the frequency difference between the frequency of the output voltage of the power conditioning system 102 and the target frequency, to control the frequency of the output voltage of the power conditioning system 102 to be the target frequency, so as to detect that islanding occurs in the power conditioning system 102.

In a possible implementation, the controller 104 is specifically configured to: adjust the frequency of the output voltage of the power conditioning system 102 in the first direction if an adjusted adjustment weight of the first frequency adjustment control is greater than an adjusted adjustment weight of the second frequency adjustment control, or adjust the frequency of the output voltage of the power conditioning system 102 in the second direction if the adjusted adjustment weight of the first frequency adjustment control is less than the adjusted adjustment weight of the second frequency adjustment control.

Specifically, the first frequency adjustment control is used to adjust the frequency of the output voltage of the power conditioning system 102 to the reference frequency of the power grid 105. The first frequency adjustment control may be considered as adjustment based on the droop characteristic. To be specific, under the first frequency adjustment control, a frequency of a final output voltage of the power conditioning system 102 may be stabilized at the reference frequency of the power grid 105.

The second frequency adjustment control is used to keep the frequency of the output voltage of the power conditioning system 102 away from the reference frequency of the power grid 105. The second frequency adjustment control may be considered as adjustment based on the anti-droop characteristic. To be specific, under the second frequency adjustment control, the frequency of the output voltage of the power conditioning system 102 may be kept away from the reference frequency of the power grid 105, so that a frequency of a final output voltage of the power conditioning system 102 is adjusted to the target frequency.

That the controller 104 controls the power conditioning system 102 to finally present a characteristic of the first frequency adjustment control (droop characteristic)/the second frequency adjustment control (anti-droop characteristic) depends on a weight proportion of the first frequency adjustment control (droop characteristic)/the second frequency adjustment control (anti-droop characteristic). When a first weight of the first frequency adjustment control is greater than a second weight of the second frequency adjustment control, after the first frequency adjustment control that has the first weight and that is applied by the controller 104 to the power conditioning system 102 is superimposed with the second frequency adjustment control having the second weight, the power conditioning system 102 finally presents the droop characteristic. When a weight of the first frequency adjustment control is less than a weight of the second frequency adjustment control, after the first frequency adjustment control that has the first weight and that is applied by the controller 104 to the power conditioning system 102 is superimposed with the second frequency adjustment control having the second weight, the power conditioning system 102 finally presents the anti-droop characteristic.

In a possible implementation, the controller 104 is specifically configured to: when the power conditioning system 102 is electrically connected to the power grid 105, adjust the weight of the first frequency adjustment control to be greater than the weight of the second frequency adjustment control.

When the power conditioning system 102 is connected to the power grid 105, the first weight that is of the first frequency adjustment control and that is adjusted by the controller 104 is greater than the second weight of the second frequency adjustment control for supporting the power grid voltage and the frequency of the power grid 105, so that the frequency of the output voltage of the power conditioning system 102 is adjusted in the first direction. In this case, even if the frequency of the output voltage of the power conditioning system 102 changes, the frequency of the output voltage of the power conditioning system 102 may be adjusted based on the droop characteristic of the controller 104, so that the frequency of the final output voltage of the power conditioning system 102 is close to the reference frequency of the power grid 105.

In a possible implementation, the controller 104 is specifically configured to: when the power conditioning system 102 is disconnected from the power grid 105, adjust the weight of the first frequency adjustment control to be less than the weight of the second frequency adjustment control.

After the power conditioning system 102 is disconnected from the power grid 105, because the power grid 105 loses clamping effect on the frequency of the output voltage of the power conditioning system 102, the first weight that is of the first frequency adjustment control and that is adjusted by the controller 104 is less than the second weight of the second frequency adjustment control, so that the frequency of the output voltage of the power conditioning system 102 is adjusted in the first direction, and the controller 104 may adjust the frequency of the output voltage of the power conditioning system 102 to the target frequency, to detect that islanding occurs in the power conditioning system 102. In addition, the energy storage system 100 including the power conditioning system 102 is stable in both a frequency shift process and two stages of the final operation at the target frequency.

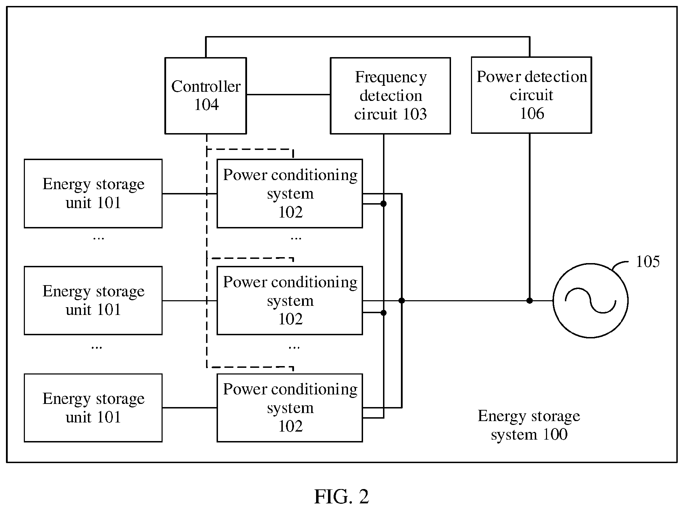

In a possible implementation, FIG. 2 is a diagram 2 of a structure of an energy storage system. A power detection circuit 106 is configured to detect a voltage and a current on a side that is of the power conditioning system 102 and that is connected to the power grid 105, to obtain power information of the power conditioning system 102. The controller 104 is further configured to control, based on the power information of the power conditioning system 102, a frequency of an output voltage of the power conditioning system 102 to a target frequency.

The controller 104 is configured to control the frequency of the output voltage of the power conditioning system 102 based on the power information of the power conditioning system 102. Specifically, the controller 104 may adjust the frequency of the output voltage of the power conditioning system 102 based on the power information of the power conditioning system 102, the first frequency adjustment control, and the second frequency adjustment control.

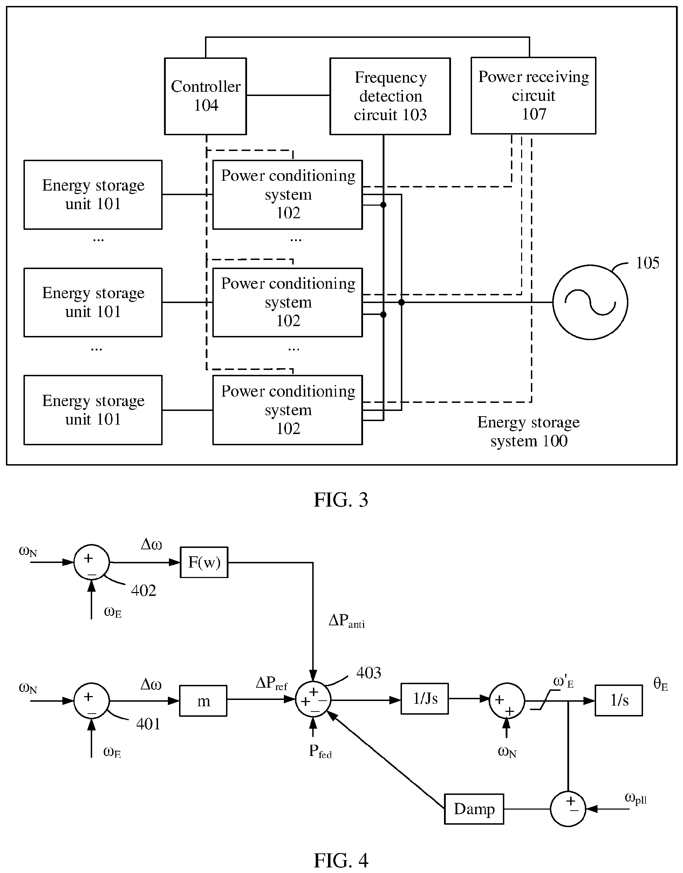

In a possible implementation, FIG. 3 is a diagram 3 of a structure of an energy storage system. The energy storage system further includes a power receiving circuit 107, configured to receive power information sent by the power conditioning system 102. The controller 104 is further configured to control, based on the power information of the power conditioning system 102, a frequency of an output voltage of the power conditioning system 102 to a target frequency.

In this way, a corresponding power detection circuit does not need to be configured for each power conditioning system 102, and only the power receiving circuit 107 is used to receive the power information sent by the power conditioning system 102, and send the received power information to the controller 104. The controller 104 may adjust the frequency of the output voltage of the power conditioning system 102 based on the power information of the power conditioning system 102, the first frequency adjustment control, and the second frequency adjustment control. This not only can reduce detection costs, but also can identify islanding.

In a possible implementation, the controller 104 is specifically configured to: adjust a magnitude of a modulated wave signal based on the power information of the power conditioning system 102, a weight of the first frequency adjustment control, and a weight of the second frequency adjustment control, and send the modulated wave signal to a drive circuit of the power conditioning system 102, to adjust the frequency of the output voltage of the power conditioning system 102.

The drive circuit of the power conditioning system 102 may include a virtual synchronous generator (virtual synchronous generator, VSG) that may simulate an operating mechanism of a synchronous generator. Specifically, a body model, active frequency modulation, reactive voltage adjustment, and other characteristics of the synchronous generator are simulated to compare the output voltage of the power conditioning system 102 with that of a conventional synchronous generator in terms of an operating mechanism and an external characteristic. The VSG essentially simulates an operating principle of the synchronous generator by controlling the power conditioning system 102, to obtain an operation characteristic similar to that of the synchronous generator. When the power grid 105 operates normally, a load of the power grid 105 fluctuates frequently, and a power of the virtual synchronous generator changes accordingly. As the load fluctuates, an excitation current needs to be adjusted to maintain a voltage at a specific point in the virtual synchronous generator or system at a given level.

The controller 104 may specifically control the adjustment weight of the first frequency adjustment control and the adjustment weight of the second frequency adjustment control based on a frequency error value, and superimposition is performed with the power information of the power conditioning system 102, to obtain a voltage amplitude reference of an internal potential of the virtual synchronous generator in the drive circuit, so as to adjust the frequency of the output voltage of the power conditioning system 102.

After the voltage amplitude reference of the internal potential of the virtual synchronous generator is obtained, a modulated wave is obtained through closed-loop control of the voltage amplitude of the internal potential. A drive signal may be generated by comparing the modulated wave with a carrier signal, and the drive signal is sent to switch components in the power conditioning system 102. The switch components in the power conditioning system 102 adjust, under control of the drive signal, a turn-on time sequence of the switch components, to adjust an active power value output by the power conditioning system 102.

The power conditioning system 102 may include a plurality of switch components. The switch components may be one or more of a plurality of types of switch components such as an MOSFET, a bipolar junction transistor (bipolar junction transistor, BJT), an insulated gate bipolar transistor (insulated gate bipolar transistor, IGBT), and a silicon carbide (SiC) power transistor. Details are not listed in embodiments of this application. If the switch component included in the power conditioning system 102 is a MOS transistor, the power conditioning system 102 may be connected to a gate of the MOS transistor, and the active power value output by the power conditioning system 102 is adjusted by controlling on and off of the MOS transistor. If a transistor in the power conditioning system 102 is a BJT, the power conditioning system 102 may be connected to a base of the BJT, and the active power value output by the power conditioning system 102 is adjusted by controlling on and off of the BJT.

In a possible implementation, the controller 104 is specifically configured to: adjust the frequency of the output voltage of the power conditioning system 102 in the first direction based on the voltage and the current on the side that is of the power conditioning system 102 and that is connected to the power grid for an active load increased for the power conditioning system 102 to be smaller; or adjust the frequency of the output voltage of the power conditioning system 102 in the second direction based on the voltage and the current on the side that is of the power conditioning system 102 and that is connected to the power grid for an active load decreased for the power conditioning system 102 to be greater.

FIG. 4 is a diagram of frequency adjustment performed by the power conditioning system. A rated frequency of the power grid 105 is represented by ωN, a frequency value (an angular frequency of an internal potential) output by the power conditioning system 102 is represented by ωE, and a difference between the frequency of the power grid and a frequency of an output voltage of the power conditioning system 102 is Δω. In a first processing unit 401, after a difference between ωN and ωE is used as a first frequency difference signal, multiplication processing is performed on the frequency difference signal by a specified coefficient (for example, a droop coefficient m). Then, a first power reference value ΔP_{ref} of the power conditioning system 102 is adjusted based on a processed first weight of first frequency adjustment control. In a second processing unit 402, after the difference between ωN and ωE is used as a second frequency difference signal, multiplication processing is performed on the frequency difference signal by a specified coefficient (for example, an anti-droop coefficient F(w)). Then, a second power reference value ΔPₐₙₜᵢ of the power conditioning system 102 is adjusted based on a processed second weight of second frequency adjustment control.

Then, the first power reference value ΔP_{ref} and the second power reference value ΔPₐₙₜᵢ are input to a third processing unit 403. A difference between each of the first power reference value ΔP_{ref} and the second power reference value ΔPₐₙₜᵢ, and power information P_{fed} of the power conditioning system 102 is calculated. The obtained differences are used as inputs of a virtual inertia 1/Js, and then amplitude limiting processing is performed on a superposition result of an output value and ωN to obtain an amplitude limiting result, which is represented by ω'E. Then, integration processing (an integration process is represented by 1/s) is performed on the amplitude limiting result, to obtain a frequency reference signal θE of the output voltage of the power conditioning system 102. A difference between ω'E and an angular velocity ωpll of a phase-locked loop may also be used as an input of a damping Damp, and an output of the damping Damp is used as a feedback value of a damping power.

When the first power reference value ΔP_{ref} is greater than the second power reference value ΔPₐₙₜᵢ, the first frequency adjustment control corresponding to the first power reference value ΔP_{ref} plays a main role in frequency adjustment, and an output characteristic of the power conditioning system 102 is reflected as a droop characteristic, to adjust the frequency of the output voltage of the power conditioning system 102 to a reference frequency of the power grid. When the first power reference value ΔP_{ref} is less than the second power reference value ΔPₐₙₜᵢ, the second frequency adjustment control corresponding to the second power reference value ΔPₐₙₜᵢ plays a main role in frequency adjustment, and an output characteristic of the power conditioning system 102 is reflected as an anti-droop characteristic, to adjust the frequency of the output voltage of the power conditioning system 102 to a target frequency. This is merely an example for description. Specific numerical requirements for the first weight, the second weight, the droop coefficient, and the anti-droop coefficient in the foregoing embodiment are not limited in this application, and a person skilled in the art may perform adjustment according to an actual situation.

When islanding does not occur, the power conditioning system 102 reflects a frequency-active power droop characteristic, and a droop characteristic reflected when a grid-connection frequency deviation is small enables the power conditioning system 102 to still reflect the frequency-active power droop characteristic. When islanding occurs, an off-grid frequency deviation is large, and the power conditioning system 102 reflects a frequency-active power anti-droop characteristic.

The power conditioning system 102 is networked for operation in a virtual synchronous generation mode, and has a specific active load. When the active load increases, the frequency of the power grid 105 decreases. The controller 104 enables the power conditioning system 102 to automatically increase an active power based on a droop characteristic, to increase an output power. When a relative relationship between the output power of the power conditioning system 102 and the load changes gradually, the frequency of the output voltage of the power conditioning system 102 gradually increases accordingly. After the frequency increases, an amplitude of the active load increased for the power conditioning system 102 decreases accordingly, to finally form a stable state.

When an active load P_{load} increases, a frequency ω of the power grid 105 decreases, and an output power P_{pcs} of the power conditioning system 102 increases based on a droop characteristic. Therefore, the frequency of the output voltage of the power conditioning system 102 gradually increases accordingly, to finally complete dynamic balance.

The controller 104 enables the power conditioning system 102 to automatically decrease an active power output based on an anti-droop characteristic, to decrease an output power. When a degree of mismatch between the output power of the power conditioning system 102 and the load continues to increase, the frequency of the output voltage of the power conditioning system 102 continues to decrease accordingly. After the frequency decreases, an amplitude of the active load decreased for the power conditioning system 102 increases accordingly, so that the frequency of the output voltage of the power conditioning system 102 gradually approaches the reference frequency of the power grid 105, to finally form a stable state.

When an active load P_{load} increases, a frequency ω of the power grid decreases, and an output power P_{pcs} of the power conditioning system 102 decreases based on an anti-droop characteristic. Therefore, the frequency of the output voltage of the power conditioning system 102 is gradually away from the reference frequency of the power grid 105 accordingly, to finally form dynamic imbalance.

When the first frequency adjustment control and the second frequency adjustment control of the controller 104 are simultaneously performed, the power conditioning system 102 reflects an output characteristic of the first frequency adjustment control or the second frequency adjustment control that has stronger frequency adjustment effect.

In a possible implementation, the controller 104 is further configured to: disable a target power conditioning system after detecting that islanding occurs in the target power conditioning system; or switch a target power conditioning system to an off-grid state after detecting that islanding occurs in the target power conditioning system.

Specifically, when the controller 104 detects that islanding occurs in the target power conditioning system, the controller may select the target power conditioning system to shut down, to complete an anti-islanding protection action; or the controller may switch the target power conditioning system to off-grid operation, to implement off-grid switching.

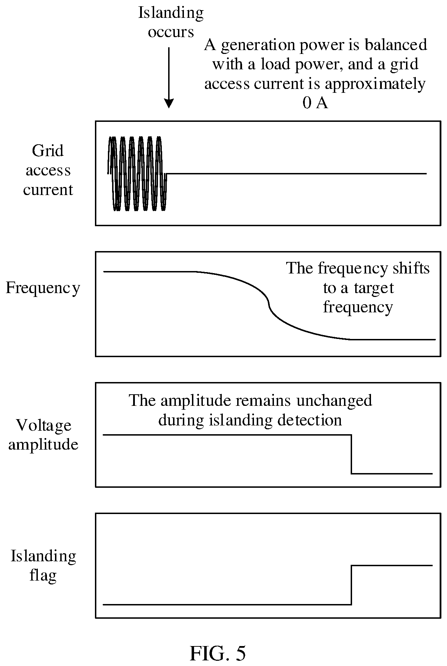

For example, FIG. 5 is a waveform diagram of the power conditioning system detected by the controller. When the power grid 105 is tripped, a sum of generation powers output by of the power conditioning system 102 is balanced with a load power, and a grid access current may be close to 0 A. At a trip moment, both a frequency and a voltage remain unchanged. However, the frequency gradually deviates from the reference frequency of the power grid under the action of the controller 104. In addition, in a process in which the frequency of the output voltage of the power conditioning system 102 is adjusted to the target frequency, the output voltage of the power conditioning system 102 remains unchanged. When the frequency of the output voltage of the power conditioning system 102 is adjusted to the target frequency, the controller 104 may detect that islanding occurs in the power conditioning system 102.

This application is applicable to a grid-connected architecture of another renewable energy power generation system, for example, a wind power generation system and a water power generation system. In the renewable energy system, a power conditioning system is configured, is used in an application scenario for outputting generated electric energy to the power grid, and is also applicable to a large-scale energy storage application scenario, a small/medium-scale distributed energy storage application scenario, and the like. This is merely an example for description, and a specific application scenario is not limited in this application. Optionally, this application is also applicable to an off-grid scenario of the renewable energy power generation system.

According to this application, presence or absence of islanding is detected without depending on a sudden change of a voltage amplitude and a sudden change of a power. However, the controller 104 adjusts the frequency of the output voltage of the power conditioning system to the target frequency based on a preset inherent anti-droop characteristic. In addition, the entire power conditioning system operates stably in the adjustment process and at a final operating frequency. When islanding is detected, the controller may disable the power conditioning system, to complete an anti-islanding protection action. Alternatively, the power conditioning system performs off-grid operation via the controller, to implement on/off-grid switching.

Based on a same concept, this application provides an islanding detection method, applied to the energy storage system 100 in the forging embodiments. The energy storage system includes at least one energy storage unit, at least one power conditioning system, a frequency detection circuit, and a controller. The at least one energy storage unit is connected to the at least one power conditioning system in a one-to-one correspondence, and any one of the at least one power conditioning system is configured to: convert a direct current input by a corresponding energy storage unit into an alternating current, and output the alternating current to a power grid. The method includes: performing first frequency adjustment control and second frequency adjustment control on the power conditioning system, and adjusting a weight of the first frequency adjustment control and a weight of the second frequency adjustment control based on a frequency difference between the frequency of the output voltage of the power conditioning system and a target frequency, to control the frequency of the output voltage of the power conditioning system to be the target frequency, so as to detect that islanding occurs in the power conditioning system. The first frequency adjustment control is used to adjust the frequency of the output voltage of the power conditioning system in a first direction, and the first direction is a direction in which the frequency of the output voltage is adjusted to be close to a reference frequency of the power grid. The second frequency adjustment control is used to adjust the frequency of the output voltage of the power conditioning system in a second direction, and the second direction is a direction in which the frequency of the output voltage is adjusted to be away from the reference frequency of the power grid.

Based on a same concept, this application further provides a photovoltaic system, including at least one photovoltaic module, at least one converter, a frequency detection circuit, and a controller. The at least one photovoltaic module is connected to the at least one converter in a one-to-one correspondence, and any one of the at least one converter is configured to: convert a direct current input by a corresponding photovoltaic module into an alternating current, and output the alternating current to a power grid. The frequency detection circuit is configured to detect a frequency of an output voltage of the converter; and the controller is configured to: perform first frequency adjustment control and second frequency adjustment control on the converter, and adjust a weight of the first frequency adjustment control and a weight of the second frequency adjustment control based on a frequency difference between the frequency of the output voltage of the power conditioning system and a target frequency, to control the frequency of the output voltage of the converter to be the target frequency, so as to detect that islanding occurs in the converter. The first frequency adjustment control is used to adjust the frequency of the output voltage of the power conditioning system in a first direction, and the first direction is a direction in which the frequency of the output voltage is adjusted to be close to a reference frequency of the power grid. The second frequency adjustment control is used to adjust the frequency of the output voltage of the power conditioning system in a second direction, and the second direction is a direction in which the frequency of the output voltage is adjusted to be away from the reference frequency of the power grid.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device like a server or a data center, integrating one or more usable media. The usable medium may be a magnetic medium (for example, a floppy disk, a hard disk, or a magnetic tape), a semiconductor medium (for example, a solid state disk (solid state disk, SSD)), or the like.

An embodiment of this application further provides a readable storage medium, configured to store the methods or algorithms provided in the foregoing embodiments, for example, a random access memory (random access memory, RAM), a flash memory, a read only memory (read only memory, ROM), an EPROM memory, a non-volatile read only memory (Electronic Programmable ROM, EPROM), a register, a hard disk, a removable disk, or any other form of storage medium in the art.

Steps of the methods or algorithms described in embodiments of this application may be directly embedded into a control apparatus. The control apparatus may include a RAM memory, a flash memory, a ROM memory, an EPROM memory, a register, a hard disk, a removable magnetic disk, or a storage medium in any form in this field, and is configured to store steps of the methods or algorithms provided in embodiments of this application. For example, the storage medium may be connected to a processing module or a processor (or a controller) in the control apparatus, so that the processing module or the processor (or the controller) may read information from the storage medium, and may store and write information to the storage medium. Optionally, the storage medium may be further integrated into the processing module and the processor (or the controller).

## Claims

1. An energy storage system, comprising at least one energy storage unit, at least one power conditioning system, a frequency detection circuit, and a controller, wherein
the at least one energy storage unit is connected to the at least one power conditioning system in a one-to-one correspondence, and any one of the at least one power conditioning system is configured to: convert a direct current input by a corresponding energy storage unit into an alternating current, and output the alternating current to a power grid;
the frequency detection circuit is configured to detect a frequency of an output voltage of the power conditioning system; and
the controller is configured to: perform first frequency adjustment control and second frequency adjustment control on the power conditioning system, and adjust a weight of the first frequency adjustment control and a weight of the second frequency adjustment control based on a frequency difference between the frequency of the output voltage of the power conditioning system and a target frequency, to control the frequency of the output voltage of the power conditioning system to be the target frequency, so as to detect that islanding occurs in the power conditioning system, wherein the first frequency adjustment control is used to adjust the frequency of the output voltage of the power conditioning system in a first direction, and the first direction is a direction in which the frequency of the output voltage is adjusted to be close to a reference frequency of the power grid; and the second frequency adjustment control is used to adjust the frequency of the output voltage of the power conditioning system in a second direction, and the second direction is a direction in which the frequency of the output voltage is adjusted to be away from the reference frequency of the power grid.

2. The energy storage system according to claim 1, wherein the energy storage system further comprises a power detection circuit, configured to detect a voltage and a current on a side that is of the power conditioning system and that is connected to the power grid, to obtain power information of the power conditioning system; and
the controller is further configured to control the frequency of the output voltage of the power conditioning system to be the target frequency based on the power information of the power conditioning system.

3. The energy storage system according to claim 2, wherein the controller is further configured to:
adjust the weight of the first frequency adjustment control and the weight of the second frequency adjustment control based on the frequency difference between the frequency of the output voltage of the power conditioning system and the target frequency; and
control the frequency of the output voltage of the power conditioning system to be the target frequency based on the power information of the power conditioning system, the weight of the first frequency adjustment control, and the weight of the second frequency adjustment control, to detect that islanding occurs in the power conditioning system.

4. The energy storage system according to claim 3, wherein the controller is specifically configured to:
adjust a magnitude of a modulated wave signal based on the power information of the power conditioning system, the weight of the first frequency adjustment control, and the weight of the second frequency adjustment control, and send the modulated wave signal to a drive circuit of the power conditioning system, to adjust the frequency of the output voltage of the power conditioning system.

5. The energy storage system according to claim 3 or 4, wherein the controller is specifically configured to:
adjust the frequency of the output voltage of the power conditioning system in the first direction based on the voltage and the current on the side that is of the power conditioning system and that is connected to the power grid for an active load increased for the power conditioning system to be smaller; or adjust the frequency of the output voltage of the power conditioning system in the second direction based on the voltage and the current on the side that is of the power conditioning system and that is connected to the power grid for an active load decreased for the power conditioning system to be greater.

6. The energy storage system according to any one of claims 1 to 5, wherein the controller is specifically configured to:
adjust the frequency of the output voltage of the power conditioning system in the first direction if an adjusted adjustment weight of the first frequency adjustment control is greater than an adjusted adjustment weight of the second frequency adjustment control, or adjust the frequency of the output voltage of the power conditioning system in the second direction if an adjusted adjustment weight of the first frequency adjustment control is less than an adjusted adjustment weight of the second frequency adjustment control.

7. The energy storage system according to any one of claims 1 to 6, wherein the controller is specifically configured to: when the power conditioning system is electrically connected to the power grid, adjust the weight of the first frequency adjustment control to be greater than the weight of the second frequency adjustment control.

8. The energy storage system according to any one of claims 1 to 7, wherein the controller is specifically configured to: when the power conditioning system is disconnected from the power grid, adjust the weight of the first frequency adjustment control to be less than the weight of the second frequency adjustment control.

9. The energy storage system according to any one of claims 1 to 8, wherein the controller is further configured to:
disable a target power conditioning system after detecting that islanding occurs in the target power conditioning system; or switch a target power conditioning system to an off-grid state after detecting that islanding occurs in the target power conditioning system.

10. An islanding detection method, applied to an energy storage system, wherein the energy storage system comprises at least one energy storage unit, at least one power conditioning system, a frequency detection circuit, and a controller, the at least one energy storage unit is connected to the at least one power conditioning system in a one-to-one correspondence, and any one of the at least one power conditioning system is configured to: convert a direct current input by a corresponding energy storage unit into an alternating current and output the alternating current to a power grid; and the method comprises:
performing first frequency adjustment control and second frequency adjustment control on the power conditioning system, and adjusting a weight of the first frequency adjustment control and a weight of the second frequency adjustment control based on a frequency difference between a frequency of an output voltage of the power conditioning system and a target frequency, to control the frequency of the output voltage of the power conditioning system to be the target frequency, so as to detect that islanding occurs in the power conditioning system, wherein the first frequency adjustment control is used to adjust the frequency of the output voltage of the power conditioning system in a first direction, and the first direction is a direction in which the frequency of the output voltage is adjusted to be close to a reference frequency of the power grid; and the second frequency adjustment control is used to adjust the frequency of the output voltage of the power conditioning system in a second direction, and the second direction is a direction in which the frequency of the output voltage is adjusted to be away from the reference frequency of the power grid.
